# EUROPEAN PATENT APPLICATION

(11) **EP 4 742 655 A1**
(43) Date of publication of application: **13.05.2026**
(21) Application number: 24917316.2
(22) Date of filing: 06.12.2024
(51) Int. Cl.: H04N 13/359, H04N 13/383, H04N 13/305, H04N 13/106, G02B 30/27, G06F 3/01, G06N 3/04, G06T 19/00, G06V 40/18

(54) **ELECTRONIC DEVICE AND CONTROL METHOD THEREFOR**

(30) Priority: 08.01.2024 KR 20240003039; 16.04.2024 KR 20240050870
(71) Applicant: Samsung Electronics Co., Ltd., Suwon-si, Gyeonggi-do 16677 (KR)
(72) Inventor: YOON, Daewon, Suwon-si Gyeonggi-do 16677 (KR); CHO, Seungki, Suwon-si Gyeonggi-do 16677 (KR)
(74) Representative: Gulde & Partner
(86) International application number: PCT/KR2024/019986
(87) International publication number: WO 2025/150720

(57) **Abstract**

An electronic apparatus including a display that is operable in a 3D mode and a 2D mode; a camera to capture an image in front of the display; a memory storing at least one instruction; and a processor to execute the at least one instruction to identify whether a user is positioned in front of the display based on the captured image, when the user is identified as being in front of the display, identify whether a user gaze is directed toward a front of the display, when the user gaze is identified as being directed toward the front of the display, control the display to operate in the 3D mode, and, when the user is not identified as being in front of the display, or the user gaze is identified as not being directed toward the front of the display, control the display to operate in the 2D mode.

## Description

### [Technical Field]

The present disclosure relates to an electronic apparatus and a control method thereof, and more particularly, to an electronic apparatus that provides a three-dimensional (3D) image, and a control method thereof.

### [Background Art]

Various types of electronic devices have been developed and supplied in accordance with the development of electronic technology. In particular, display devices used in various places such as homes, offices, public places have been continuously developed over the recent years.

Stereoscopy refers to three-dimensional (3D) technology. A 3D display, which is currently being commercialized, is mainly implemented using a binocular parallax method. The binocular parallax method may provide a three-dimensional effect on a single screen such as a television (TV) or theater screen. The binocular parallax method may be classified into a glasses method (stereoscopy) that uses an auxiliary device such as glasses and a glasses-free method (autostereocopy).

Continuous research has been recently conducted on the commercialization of a glasses-free light field display and a glasses-free 3D display using eye-tracking.

### [Disclosure]

### [Technical Solution]

Aspects of embodiments of the disclosure will be set forth in part in the description which follows and, in part, will be apparent from the description, or may be learned by practice of the presented embodiments.

According to an embodiment of the disclosure, an electronic apparatus includes a display configured to be operated in a three-dimensional (3D) mode and a two-dimensional (2D) mode; at least one camera to capture an image in front of the display; a memory storing at least one instruction; and at least one processor configured to execute the at least one instruction to identify whether a user is positioned in front of the display based on the captured image, when the user is identified as being positioned in front of the display, identify whether a user gaze is directed toward a front of the display, when the user gaze is identified as being directed toward the front of the display, control the display to be operated in the 3D mode, and, when the user is not identified as being positioned in front of the display, or when the user gaze is identified as not being directed toward the front of the display, control the display to be operated in the 2D mode.

According to an embodiment of the disclosure, the at least one processor may be configured to execute the at least one instruction to, when the user gaze is identified as being directed toward the front of the display, identify a probability that content to be displayed is stereoscopic content for each content duration, control the display to be operated in the 3D mode in a content duration in which the identified probability of the stereoscopic content is a threshold value or more, and control the display to be operated in the 2D mode in a content duration in which the identified probability of the stereoscopic content is less than the threshold value.

According to an embodiment of the disclosure, the at least one processor may be configured to execute the at least one instruction to input the content to be displayed into a trained artificial intelligence model trained for each content duration, and identify the probability that the content to be displayed is the stereoscopic content based on information output from the trained artificial intelligence model.

According to an embodiment of the disclosure, the at least one processor may be configured to execute the at least one instruction to input the captured image into a trained artificial intelligence model, and identify whether the user gaze is directed toward the front of the display based on information output from the trained artificial intelligence model.

According to an embodiment of the disclosure, content to be displayed may include side-by-side content. The at least one processor may be configured to execute the at least one instruction to identify whether similarity between a left region of the side-by-side content and a right region of the side-by-side content is a threshold value for each side-by-side content duration, control the display to be operated in the 3D mode in the side-by-side content duration in which the similarity between the left region of the side-by-side content and the right region of the side-by-side content is the threshold value or more, and control the display to be operated in the 2D mode in the side-by-side content duration in which the similarity between the left region of the side-by-side and the right region of the side-by-side content is less than the threshold value.

According to an embodiment of the disclosure, the at least one processor may be configured to execute the at least one instruction to, while the display is being operated in the 3D mode, when the user is not identified as being positioned in front of the display, or when the user gaze is identified as not being directed toward the front of the display, control the display to switch to the 2D mode.

According to an embodiment of the disclosure, the at least one processor may be configured to execute the at least one instruction to, while the the display is being operated in the 3D mode, when the user gaze is identified as being directed toward the front of the display, identify whether content to be displayed is stereoscopic content for each content duration, and control the display to be switched to the 3D mode when the content to be displayed is identified as the stereoscopic content.

According to an embodiment of the disclosure, the at least one processor may be configured to execute the at least one instruction to identify a probability that content to be displayed is stereoscopic content for each content duration, identify whether the user gaze is directed toward the front of the display based on the captured image in the content duration in which the identified probability of the stereoscopic content is a threshold value or more, control the display to be operated in the 3D mode when the user gaze is identified as being directed toward the front of the display and the identified probability of the stereoscopic content is the threshold value or more, and control the display to be operated in the 2D mode in the content duration in which the identified probability of the stereoscopic content is less than the threshold value.

According to an embodiment of the disclosure, the at least one processor may be configured to execute the at least one instruction to identify the user as being positioned in front of the display when a specific body part of the user is included in the captured image or a user body region that has a predetermined ratio or more is identified as being included in the captured image.

According to an embodiment of the disclosure, the display may be implemented as a light field display including a lenticular lens array. The at least one processor may be configured to control the display to be operated either in the 3D mode or the 2D mode by adjusting a voltage applied to the lenticular lens array included in the light field display.

According to an embodiment of the disclosure, provided is a method of controlling an electronic apparatus which includes a display configured to be operated in a three-dimensional (3D) mode and a two-dimensional (2D) mode, and at least one camera to capture an image in front of the display, the method including identifying whether a user is positioned in front of the display based on an image captured by the at least one camera; when the user is identified as being positioned in front of the display, identifying whether a user gaze is directed toward a front of the display; when the user gaze is identified as being directed toward the front of the display, controlling the display to be operated in the 3D mode; and, when the user is not identified as being positioned in front of the display, or when the user gaze is identified as not being directed toward the front of the display, controlling the display to be operated in the 2D mode.

According to an embodiment of the disclosure, provided is a non-transitory computer-readable medium which stores a computer instruction for causing an electronic apparatus to perform an operation in case of being executed by a processor of the electronic apparatus including a display configured to be operated in a three-dimensional (3D) mode and a two-dimensional (2D) mode, and at least one camera to capture an image in front of the display, wherein the operation includes identifying whether a user is positioned in front of the display based on an image captured by the at least one camera; when the user is identified as being positioned in front of the display, identifying whether a user gaze is directed toward a front of the display; when the user gaze is identified as being directed toward the front of the display, controlling the display to be operated in the 3D mode; and, when the user is not identified as being positioned in front of the display, or when the user gaze is identified as not being directed toward the front of the display, controlling the display to be operated in the 2D mode.

### [Description of Drawings]

The above and other aspects, features, and advantages of embodiments of the present disclosure will be more apparent from the following description taken in conjunction with the accompanying drawings.
FIG. 1 is a diagram for explaining an operation of an electronic apparatus according to one or more embodiments.
FIG. 2A is a block diagram showing a configuration of the electronic apparatus according to an embodiment of the disclosure.
FIG. 2B is a block diagram showing a detailed configuration of the electronic apparatus according to one or more embodiments of the disclosure.
FIG. 3A is a diagram for explaining the structure and operation of a display according to one or more embodiments of the disclosure.
FIG. 3B is a diagram for explaining the structure and operation of a display according to one or more embodiments of the disclosure.
FIG. 4 is a flow chart for explaining a control method of an electronic apparatus according to one or more embodiments of the disclosure.
FIG. 5A is a diagram for explaining a user identification method according to one or more embodiments of the disclosure.
FIG. 5B is a diagram for explaining a user identification method according to one or more embodiments of the disclosure.
FIG. 6 is a diagram for explaining a method of acquiring user gaze information according to one or more embodiments of the disclosure.
FIG. 7 is a diagram for explaining a method of acquiring user gaze information according to one or more embodiments of the disclosure.
FIG. 8 is a flowchart for explaining a control method of an electronic apparatus according to one or more embodiments of the disclosure.
FIG. 9A is a diagram for explaining a method for identifying whether content is stereoscopic content according to one or more embodiments of the disclosure.
FIG. 9B is a diagram for explaining a method for identifying whether content is stereoscopic content according to one or more embodiments of the disclosure.
FIG. 10 is a flowchart for explaining a control method of an electronic apparatus according to one or more embodiments of the disclosure.
FIG. 11A is a diagram for explaining a method for identifying whether content is stereoscopic content according to one or more embodiments of the disclosure.
FIG. 11B is a diagram for explaining a method for identifying whether content is stereoscopic content according to one or more embodiments of the diisclosure.
FIG. 12 is a flowchart for explaining a control method of an electronic apparatus according to one or more embodiments of the disclosure.

### [Best Mode]

Terms used in the specification are briefly described, and the present disclosure is then described in detail.

General terms that are currently widely used are selected as terms used in embodiments of the present disclosure in consideration of their functions in the present disclosure, and may be changed based on the intentions of those skilled in the art, cases in the art, the emergence of a new technique, or the like. In addition, in a specific case, terms arbitrarily chosen by an applicant may exist. In this case, the meanings of such terms are explained in detail in corresponding description portions of the present disclosure. Therefore, the terms used in the present disclosure need to be defined on the basis of the meanings of the terms and the contents throughout the present disclosure rather than simple names of the terms.

In the specification, an expression "have", "may have", "include", "may include", or the like, indicates the existence of a corresponding feature (for example, a numerical value, a function, an operation, or a component such as a part), and does not exclude the existence of an additional feature.

In the present disclosure, an expression "A or B", "at least one of A and/or B", "one or more of A and/or B", or the like, may include all possible combinations of items enumerated together. For example, "A or B", "at least one of A and B" or "at least one of A or B" may indicate all of 1) a case of including only A, 2) a case of including only B, or 3) a case of including both of A and B.

Expressions "first", "second," and the like, used in the specification may qualify various components regardless of the sequence and/or importance of the components. The expression is used only to distinguish one component from another component, and does not limit the corresponding component.

If any component (for example, a first component) is mentioned to be "(operably or communicatively) coupled with/to" or "connected to" another component (for example, a second component), it is to be understood that any component may be directly coupled to another component or may be coupled to another component through still another component (for example, a third component).

An expression "configured (or set) to" used in the present disclosure may be replaced by an expression "suitable for", "having the capacity to", "designed to", "adapted to", "made to", or "capable of" based on a situation. The expression "configured (or set) to" may not necessarily indicate "specifically designed to" in hardware.

An expression "a device configured to" in some contexts may indicate that the device may "perform~" together with another device or component. For example, "a processor configured (or set) to perform A, B and C" may indicate a dedicated processor (for example, an embedded processor) that may perform the corresponding operations or a generic-purpose processor (for example, a central processing unit (CPU) or an application processor) that may perform the corresponding operations by executing one or more software programs stored in a memory device.

A term of a singular number may include its plural number unless explicitly indicated otherwise in the context. It is to be understood that a term "include", "formed of", or the like used in the application specifies the presence of features, numerals, steps, operations, components, parts, or combinations thereof, mentioned in the specification, and does not preclude the presence or addition of one or more other features, numerals, steps, operations, components, parts, or combinations thereof.

In the embodiments, a "module" or a "~er/or" may perform at least one function or operation, and be implemented in hardware or software, or be implemented by a combination of hardware and software. In addition, a plurality of "modules" or a plurality of "~ers/~ors" may be integrated into at least one module and implemented by at least one processor (not shown), except for a "module" or a "~er/or" that needs to be implemented by specific hardware.

Meanwhile, various elements and regions in the drawings are schematically shown. Therefore, the spirit of the present disclosure is not limited by relative sizes or spacings shown in the accompanying drawings.

Hereinafter, an embodiment of the present disclosure is described in detail with reference to the accompanying drawings.

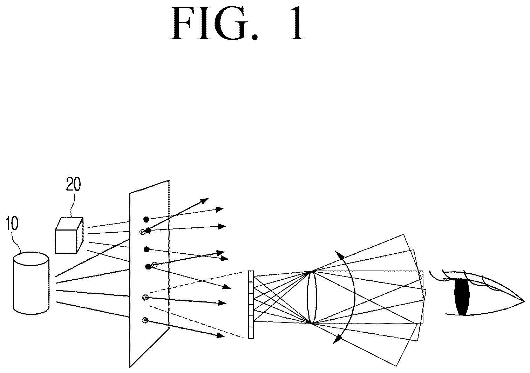

FIG. 1 is a diagram for explaining an operation of an electronic apparatus according to one or more embodiments.

An electronic apparatus 100 may be implemented as various types of display devices such as a television (TV), a monitor, a kiosk, a tablet personal computer (PC), an electronic picture frame, a mobile phone, a large format display (LFD), a digital signage, a digital information display (DID), a video wall, and a projector display. However, in some cases, the electronic apparatus 100 may be implemented as an image processing device (for example, a set-top box or a one connected box) that is connected to a display device and provides an image.

According to an embodiment, the electronic apparatus 100 may include a light field display. The light field display may be implemented using display technology that provides a more realistic visual experience by expressing light field information, unlike an existing two-dimensional (2D) or three-dimensional (3D) display.

In general, the 2D or 3D display may provide limited information on the direction and depth of light. However, the light field display may provide a visual experience similar to that observed in a real world by expressing additional information on the direction and depth of light by using the light field information. As an example, the light field display may be used to provide a more realistic environment in virtual reality and/or augmented reality devices.

FIG. 1 is a diagram for explaining an operation of the light field display using a lenticular lens method. Referring to FIG. 1, a series of display pixels may be assigned to each lenticular lens, for example, a micro lens array, and light from each pixel may be directed in a specific direction by the lens, thus forming a light field expressed in the intensity and direction of light. A user may feel a sense of three-dimensionality in case of gazing at the display within the light field formed in this way.

According to an embodiment, the electronic apparatus 100 may be operated in a 3D mode for providing a 3D image or in a 2D mode for providing a 2D image, based on the presence of the user in front, a context of the electronic apparatus 100 and/or a context of the user.

Hereinafter, the description describes various embodiments of switching between the 3D mode and the 2D mode based on the context of the electronic apparatus 100 and/or the context of the user.

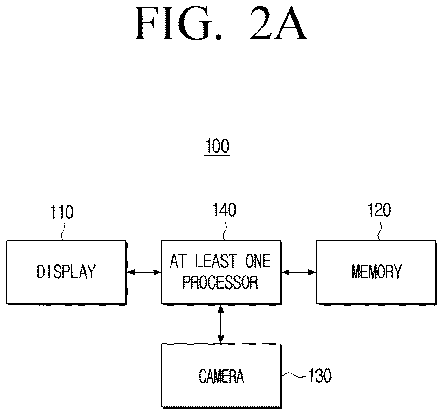

FIG. 2A is a block diagram showing a configuration of the electronic apparatus according to an embodiment.

Referring to FIG. 2A, the electronic apparatus 100 may include the display 110, a memory 120, a camera 130, and at least one processor 140.

The display 110 may be implemented as a display including a self-light emitting element or a display including a non self-light emitting element and a backlight. For example, the display 110 may be implemented in various types of displays such as a liquid crystal display (LCD), an organic light emitting diode (OLED) display, a light emitting diode (LED) display, a micro light emitting diode (micro LED) display, a mini LED display, a plasma display panel (PDP), a quantum dot (QD) display, and a quantum dot light-emitting diode (QLED) display. As an example, a touch sensor detecting a touch operation while having the form of a touch film, a touch sheet, a touch pad, or the like may be disposed on a front surface of the display panel 110, and may be implemented to detect various types of touch input. For example, the display 110 may detect various types of touch input, such as touch input by a user hand, touch input by an input device such as a stylus pen, and touch input by a specific electrostatic material. Here, the input device may be implemented as a pen-type input device that may be referred to by various terms such as an electronic pen, a stylus pen, and an S-pen. As an example, the display 110 may be implemented as a flat display, a curved display, a foldable and/or rollable flexible display.

The memory 120 may store data necessary for the various embodiments. The memory 120 may be implemented in the form of a memory embedded in an electronic apparatus 100, or may be implemented in the form of a memory detachable from the electronic apparatus 100, based on a data storing purpose. For example, data for driving the electronic apparatus 100 may be stored in the memory embedded in the electronic apparatus 100', and data for an extension function of the electronic apparatus 100 may be stored in the memory detachable from the electronic apparatus 100. Meanwhile, the memory embedded in the electronic apparatus 100 may be implemented as at least one of a volatile memory (for example, a dynamic random access memory (DRAM), a static RAM (SRAM), or a synchronous dynamic RAM (SDRAM)), or a non-volatile memory (for example, an one time programmable read only memory (OTPROM), a programmable ROM (PROM), an erasable and programmable ROM (EPROM), an electrically erasable and programmable ROM (EEPROM), a mask ROM, a flash ROM, a flash memory (for example, a NAND flash or a NOR flash), a hard drive, or a solid state drive (SSD)). In addition, the memory detachable from the electronic apparatus 100 may be implemented in the form of a memory card (for example, a compact flash (CF), a secure digital (SD), a micro secure digital (Micro-SD), a mini secure digital (Mini-SD), an extreme digital (xD), or a multi-media card (MMC)), an external memory which may be connected to a universal serial bus (USB) port (for example, a USB memory), or the like.

As an example, the memory 120 may store at least one instruction for controlling the electronic apparatus 100 or a computer program including the instructions.

As another example, the memory 120 may store an input image, that is, an image received from an external device (for example, a source device), an external storage medium (for example, the USB), an external server (for example, a web hard drive), or the like. Alternatively, the memory 120 may store an image acquired through a camera disposed at the electronic apparatus 100.

As still another example, the memory 120 may store information, algorithms, image quality parameters, or the like for performing at least one of various information required for an image quality processing, for example, noise reduction, detail enhancement, tone mapping, contrast enhancement, color enhancement, or frame rate conversion.

According to an embodiment, the memory 120 may be implemented as a single memory for storing data generated in various operations according to the present disclosure. However, according to another embodiment, the memory 120 may be implemented to include a plurality of memories respectively storing different types of data or respectively storing data generated in different steps.

In the embodiment described above, various data are described as being stored in the external memory 120 of the processor 140. However, at least some of the data described above may be stored in an internal memory of the processor 140 according to at least one implementation example of the electronic apparatus 100 or the processor 140.

At least one camera 130 may be turned on based on a predetermined event and perform an image capture, which may be referred to herein as simply a capture. For example, at least one camera 130 may perform the capture in response to the event where the electronic apparatus 100 (or the display 110) is turned on. The camera 130 may convert a captured image into an electrical signal and generate image data based on the converted signal. For example, an object may be converted into an electrical image signal by a charge coupled device (CCD), and the converted image signal may be amplified and converted into a digital signal and then signal-processed. For example, at least one camera 130 may include at least one of a normal (or primary) camera, an ultra-wide camera, or a depth camera.

As an example, at least one camera 130 may be disposed at a position enabling the camera to capture the front of the display 110. For example, at least one camera 130 may be disposed in a central region of a top bezel of the display 110.

As an example, at least one camera 130 may be disposed in a direction and angle enabling the camera to capture images in the area in front of the display 110, which may be referred to herein as the front of the display. As an example, the camera 130 may be disposed in a direction and angle in which the camera may be recognized as facing the front of the display 110 if a user gaze faces the front in the captured image.

As an example, at least one camera 130 may include a plurality of cameras spaced apart from each other by a predetermined spacing to capture different viewpoints. For example, the predetermined spacing may be the same/similar distance between human eyes, and is not limited thereto.

At least one processor 140 may control overall operations of the electronic apparatus 100. In detail, at least one processor 140 may be connected to each component of the electronic apparatus 100 to thus control the overall operations of the electronic apparatus 100. For example, at least one processor 140 may be electrically connected to the display 110 and the memory 120 to thus control the overall operations of the electronic apparatus 100. At least one processor 140 may include one or more processors.

At least one processor 140 may perform the operation of the electronic apparatus 100 according to the various embodiments by executing at least one instruction stored in the memory 110.

As an example, an artificial intelligence related function according to the present disclosure may be operated using the processor and memory of the electronic apparatus.

At least one processor 140 may include one or more processors. Here, one or more processors may include at least one of the central processing unit (CPU), the graphic processing unit (GPU), or a neural processing unit (NPU), and are not limited to the examples of the processor described above.

The CPU is a generic-purpose processor which may perform not only general calculations but also artificial intelligence calculations, and may efficiently execute complex programs through a multi-layered cache structure. The CPU may be advantageous for a serial processing method that enables organic linkage between a previous calculation result and a next calculation result through sequential calculations. The generic-purpose processor is not limited to the above examples unless specified as the above-mentioned CPU.

The GPU is the processor for large-scale calculations such as floating-point calculations used for graphics processing, and may perform the large-scale calculations in parallel by integrating a large number of cores. In particular, the GPU may be advantageous for a parallel processing method such as convolution calculation compared to the CPU. In addition, the GPU may be used as a co-processor to supplement the function of the CPU. The processor for the large-scale calculations is not limited to the above example unless specified as the above-mentioned GPU.

The NPU is the processor specialized in the artificial intelligence calculation using an artificial neural network, and each layer included in the artificial neural network may be implemented in hardware (e.g., silicon). Here, the NPU is specially designed based on requirements of a company, and may thus have a lower degree of freedom than the CPU or the GPU. However, the NPU may efficiently process the artificial intelligence calculation required by the company. Meanwhile, as the processor specialized for the artificial intelligence calculation, the NPU may be implemented in various forms such as a tensor processing unit (TPU), an intelligence processing unit (IPU), or a vision processing unit (VPU). The artificial intelligence processor is not limited to the above example unless specified as the above-mentioned NPU.

In addition, at least one processor 140 may be implemented in a system on chip (SoC). Here, the SoC may further include the memory 110, and a network interface such as a bus for data communication between the processor 140 and the memory 110, in addition to at least one processor 140.

If the system on chip (SoC) included in the electronic apparatus 100 includes the plurality of processors, the electronic apparatus 100 may use some processors among the plurality of processors to perform the artificial intelligence related calculation (e.g., calculation related to the learning or inference of an artificial intelligence model). For example, the electronic apparatus may perform the artificial intelligence related calculation by using at least one of the GPU, the NPU, the VPU, the TPU, or a hardware accelerator that is specialized for the artificial intelligence calculation such as convolution calculation and matrix multiplication calculation among the plurality of processors 140. However, this configuration shows only one or more embodiments, and the electronic apparatus may process the artificial intelligence related calculation by using the generic-purpose processor such as the CPU.

In addition, the electronic apparatus 100 may perform calculation for an artificial intelligence related function by using multi-cores (e.g., dual-core or quad-core) included in one processor 140. In particular, the electronic apparatus may perform the artificial intelligence calculation such as the convolution calculation and the matrix multiplication calculation in parallel using the multi-cores included in the processor 140.

At least one processor 140 may control input data to be processed according to a predefined operation regulation or the neural network model (or the artificial intelligence model) stored in the memory 110. The predefined operation regulation or the artificial intelligence model may be acquired by learning.

Here, "acquired by learning" may indicate that the predefined operation regulation or artificial intelligence model of a desired feature is acquired by applying a learning algorithm to a lot of learning data. Such learning may be performed by a device itself in which the artificial intelligence is performed according to the present disclosure, or by a separate server/system.

The artificial intelligence model may include a plurality of neural network layers. At least one layer has at least one weight value, and an operation of the layer may be performed through an operation result of a previous layer and at least one defined operation. Examples of the neural network may include a convolutional neural network (CNN), a recurrent neural network (RNN), a deep neural network (DNN), a restricted Boltzmann machine (RBM), a deep belief network (DBN), a bidirectional recurrent deep neural network (BRDNN), a deep Q-network, and a transformer. However, the neural network of the present disclosure is not limited to the above examples unless a type of the neural network is specified.

The learning algorithm is a method of training a predetermined target device (e.g., robot) by using a large number of learning data for the predetermined target device to make a decision or a prediction for itself. Examples of the learning algorithm may include a supervised learning algorithm, an unsupervised learning algorithm, a semi-supervised learning algorithm, or a reinforcement learning algorithm. However, the learning algorithm of the present disclosure is not limited to the above-described examples unless otherwise specified. Hereinafter, for convenience of explanation, at least one processor 140 is referred to as the processor 140.

According to an embodiment, the electronic apparatus 100 may receive various compressed images or images of various resolutions. For example, the electronic apparatus 100 may receive the image in a compressed form such as moving picture experts group (MPEG) (for example, MP2, MP4, or MP7), joint photographic coding experts group (JPEG), advanced video coding (AVC), H.264, H.265, or high efficiency video codec (HEVC). Alternatively, the electronic apparatus 100 may receive any one of a standard definition (SD) image, a high definition (HD) image, a full HD image, an ultra HD image.

As an example, the processor 140 may image-process the input image and acquire an output image. Here, the image processing may include at least one of image enhancement, image restoration, image transformation, image analysis, image understanding, image compression, image decoding, or scaling.

In the specification, as a term referring to a portion of the image, "region" indicates at least one pixel block or a set of pixel blocks. In addition, the pixel block indicates a set of adjacent pixels that includes at least one pixel.

As an example, the input image may include the 3D image. For example, the input image may include a side-by-side image. The side-by-side image may be an image format where two images are disposed side by side on one screen. For example, each image may occupy half of a horizontal space of the screen. One image may be included in a left region and the other image may be included in a right region. For example, the image positioned in the left region may be a left-eye image, and the image positioned in the right region may be a right-eye image.

As an example, if a plurality of frames included in the input image are sequentially input, the processor 140 may store the plurality of frames in the memory 120, and read the frames stored in the memory 120, thereby performing various processing. The frame is a basic image unit in image content, and each frame includes a pixel and may include resolution and color information. Hereinafter, the content may include one frame included in the image content or the plurality of frames of a predetermined number, which may be collectively referred to as the content for convenience of explanation.

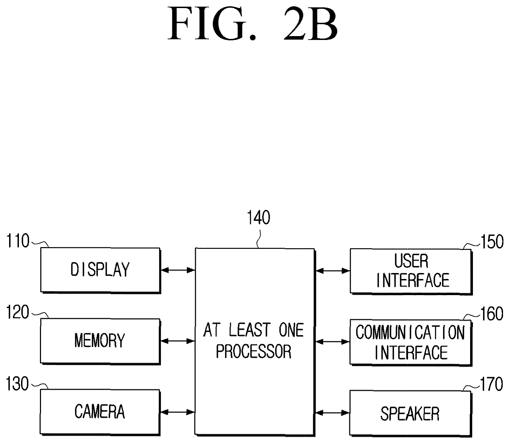

FIG. 2B is a block diagram showing a detailed configuration of the electronic apparatus according to one or more embodiments.

Referring to FIG. 2B, an electronic apparatus 100' may include the display 110, the memory 120, the camera 130, at least one processor 140, a user interface 150, a communication interface 160, and a speaker 170. The description omits detailed descriptions of components that overlap the components shown in FIG. 2A among the components shown in FIG. 2B.

The user interface 150 may be implemented as a device such as a button, a touch pad, a mouse or a keyboard, or may be implemented as a touch screen or the like which may also perform a manipulation input function in addition to the above-described display function.

The communication interface 160 may be implemented as various interfaces based on an implementation example of the electronic apparatus 100'. For example, the communication interface 160 may communicate with the external device, the external storage medium (e.g., USB memory), the external server (e.g., web hard drive), or the like by using a communication method such as a Bluetooth, an access point (AP) based wireless fidelity (Wi-Fi, i.e., wireless local area network (LAN)), a Zigbee, a wired/wireless local area network (LAN), a wide area network (WAN), Ethernet, an IEEE 1394, a high-definition multimedia interface (HDMI), a universal serial bus (USB), a mobile high-definition link (MHL), an audio engineering society/European broadcasting union (AES/EBU) communication, an optical communication, or a coaxial communication. As an example, the communication interface 160 may perform communication with another electronic apparatus, the external server and/or a remote control apparatus, or the like.

The speaker 170 may be a component for outputting not only various audio data but also various notification sounds, voice messages, or the like. The processor 140 may control the speaker 170 to output feedbacks or various notifications in an audio form according to the various embodiments of the present disclosure.

In addition, the electronic apparatus 100' may include a sensor, a microphone, or the like in some implementation examples.

The sensor may include various types of sensors, such as the touch sensor, a proximity sensor, an acceleration sensor (or a gravity sensor), a geomagnetic sensor, a gyro sensor, a pressure sensor, a position sensor, a distance sensor, or a light sensor.

The microphone is a component for receiving a user voice or another sound and converting the same into audio data. However, according to another embodiment, the electronic apparatus 100' may receive the user voice, which is input through the external device, through the communication interface 160.

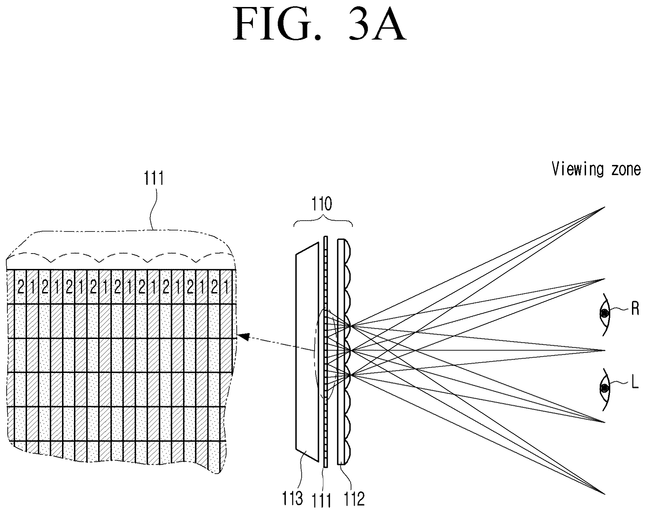

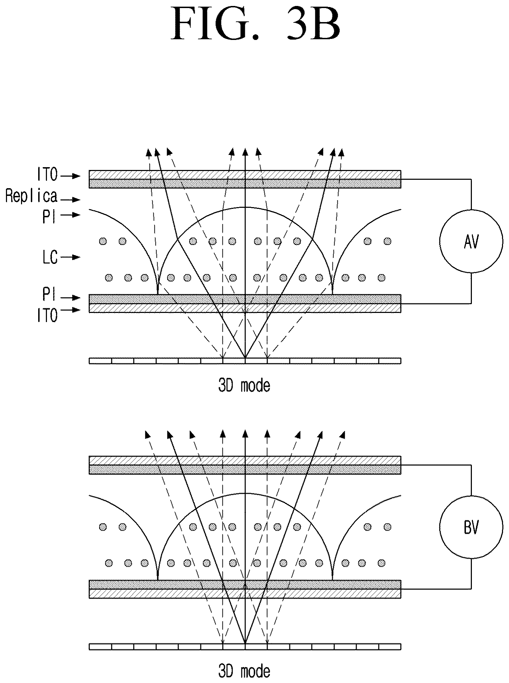

FIGS. 3A and 3B are diagrams for explaining the structure and operation of a display 110 according to one or more embodiments.

According to FIG. 3A, the display 110 may include a display panel 111, a field of view separator 112, and a backlight unit 113. However, the backlight unit 113 may not be included in the display 110 in some implementation examples of the display 110.

The display panel 111 may include a plurality of pixels including a plurality of sub-pixels. Here, the sub-pixel may include red (R), green (G), and blue (B) pixels. For example, the display panel 111 may include pixels each including the R, G, and B sub-pixels and arranged in multiple row and column directions.

The display panel 111 may display a binocular view image (or a multi-view image). For example, the display panel 111 may display an image where the plurality of images including the right-eye image and the left-eye image are sequentially and repeatedly disposed.

The field of view separator 112 may be disposed in front of the display panel 111 and may provide a multi-view, i.e., different viewpoints for each viewing zone. In this case, the field of view separator 112 may be implemented as the lenticular lens or a parallax barrier. As an example, the field of view separator 112 may be implemented as the lenticular lens including a plurality of lens regions. Accordingly, the lenticular lens may refract an image displayed on the display panel 111 through the plurality of lens regions. Each lens region may have a size corresponding to at least one pixel, thus dispersing light passing through each pixel differently for each viewing zone. As another example, the field of view separator 112 may be implemented as the parallax barrier. The parallax barrier may be implemented as an array of transparent slits including a plurality of barrier regions. Accordingly, the field of view separator 112 may block light by using the slit between the barrier regions to allow an image having the different viewpoint for each viewing zone to be output.

As an example, the field of view separator 112 may be implemented to be operated while being inclined at a certain angle to improve an image quality, that is, to avoid resolution reduction. In this case, the processor 140 may segment the right-eye image and the left-eye image based on the angle at which the field of view separator 112 is inclined, and combine the images to generate the multi-view image. Accordingly, the user may watch an image displayed while having a constant inclination on the sub-pixels of the display panel 111 rather than an image displayed vertically or horizontally on the sub-pixels.

As an example, the field of view separator 112 may be implemented as an active type for the display 110 to be operated in the 3D mode or the 2D mode. For example, the field of view separator 112 may be implemented as an active lenticular lens or an active parallax barrier.

As an example, the field of view separator 112 may be implemented as a lenticular lens array as shown in FIG. 3B.

As shown in FIG. 3B, if the display 110 is operated in a 3D mode, the processor 140 may control a lenticular lens 112 to be operated in the 3D mode by applying a predetermined voltage corresponding to the 3D mode to the active-type lenticular lens 112. In addition, if the display 110 is operated in a 2D mode, the processor 140 may control the lenticular lens 112 to be operated in the 2D mode by applying a predetermined voltage corresponding to the 2D mode to the active-type lenticular lens 112.

As an example, the lenticular lens 112 may include a plurality of micro lenticular lenses, and have a lens pattern formed within a gap between the display panel 111 and the lenticular lens 112.

For example, as shown in FIG. 3B, the lenticular lens 112 may include a replica where a liquid crystal fills a transparent frame made of micro lens-shaped polyimide (PI), and the outside is made of a material having the same refractive index as a liquid crystal molecule in a voltage-applied state. Indium tin oxide (ITO) electrodes to which the voltage is applied may be disposed above and below the micro lens having this structure. In the 3D mode, where a voltage A is applied, a difference in the refractive index may occur between the internal liquid crystal molecule and the external replica, thus resulting in an effect of light passing through the lenticular lens. On the other hand, in the 2D mode, where a voltage B is applied, a state of the liquid crystal may be changed to have the same refractive index as the external replica, thus allowing input light to pass through as it is.

The backlight unit 113 may provide light to the display panel 111. Left-eye and right-eye images 1 and 2 formed on the display panel 111 by light provided by the backlight unit 113 may be projected onto the field of view separator 112, and the field of view separator 112 may disperse light of each projected image 1 or 2 and transmit the same toward a viewer. For example, the field of view separator 112 may generate exit pupils at a viewer position, that is, a viewing distance. As shown in FIG. 3A, the thickness and diameter of the lenticular lens if the field of view separator 112 is implemented as the lenticular lens array, and the slit spacing or the like of the field of view separator 112 if the separator 112 is implemented as the parallax barrier may be designed for the exit pupils generated by the respective rows to be separated by an average binocular center distance of less than 65 mm.

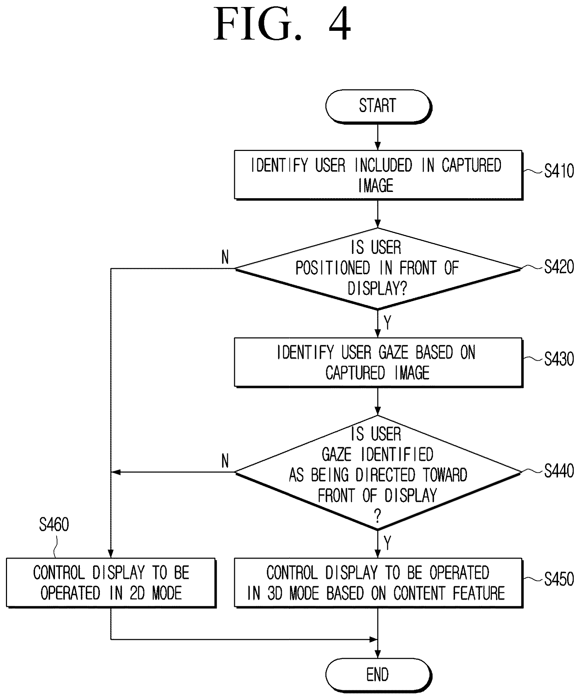

FIG. 4 is a flow chart for explaining a control method of an electronic apparatus according to one or more embodiments.

Referring to FIG. 4, in operation 410, the electronic apparatus 100 may identify the user included in a captured image.

As an example, the electronic apparatus 100 may identify the user based on a human shape in the captured image acquired by the camera 130. For example, the electronic apparatus 100 may identify an object region included in the captured image by using at least one technique among object recognition, object detection, object tracking, or image segmentation. For example, the electronic apparatus 100 may identify the user by using a technique such as semantic segmentation which classifies and extracts the objects included in the input image by type, instance segmentation which recognizes the objects by classifying the objects by type even if the objects are the same type, or a bounding box which has the shape of a square that includes detected objects in case of detecting the objects included in the image, if necessary.

In operation 420, the electronic apparatus 100 may identify whether the user is positioned in front of the display 110 based on the captured image if the user is identified in the captured image.

As an example, the electronic apparatus 100 may identify that the user is positioned in front of the display 110 if the user is identified as being included in the captured image.

As an example, the electronic apparatus 100 may identify that the user is included in the captured image if a specific body part of the user is included in the captured image. For example, the specific body part of the user may be a user head.

As an example, the electronic apparatus 100 may identify that the user is included in the captured image if a threshold ratio or more of a user body region is detected in the captured image. For example, the electronic apparatus 100 may identify that the user is included in the captured image if 90% or more of the user body region is detected.

According to an embodiment, the electronic apparatus 100 may determine differently whether the user is positioned in front of the display 110 based on an angle of view of the camera 130. The angle of view of the camera 130 is a width of the field of view captured by the camera 130, and a capturing range included in the captured image may thus be changed based on the angle of view of the camera 130. The angle of view of the camera 130 may include a horizontal angle of view and a vertical angle of view. For example, the angle of view of the camera may be changed based on a type of camera lens. The camera may have a different angle of view, such as a wide-angle lens, a standard lens, or a telephoto lens, based on the type of camera lens.

As an example, the angle of view of the camera 130 may be adjusted based on a user setting.

As an example, the electronic apparatus 100 may adjust the angle of view of the camera 130, for example, at least one of the horizontal angle of view or the vertical angle of view, based on a size of a space where the electronic apparatus 100 is positioned (for example, a size of a space in front of the electronic apparatus 100), a type of space (for example, a private space or a public space), or the like.

As an example, the electronic apparatus 100 may adjust the angle of view of the camera 130, for example, at least one of the horizontal angle of view or the vertical angle of view, based on a content feature such as a type of content or three-dimensional information of the content.

As an example, the electronic apparatus 100 may adjust the angle of view of the camera 130, for example, at least one of the horizontal angle of view or the vertical angle of view, based on a user context such as user profile information or a content viewing tendency of the user.

As an example, the electronic apparatus 100 may adjust the angle of view of the camera 130, for example, at least one of the horizontal angle of view or the vertical angle of view, based on the context of the electronic apparatus 100, such as a specification of the electronic apparatus 100, a specification of the display 110, or a resolution of the display 110.

In operation 430, the electronic apparatus 100 may identify the user gaze based on the captured image if the user is identified as being positioned in front of the display 110 (S420-Y).

As an example, the electronic apparatus 100 may detect a position of a user face in the captured image and identify user eyes on the user face to thus acquire user gaze information in real time. For example, a facial region detection method may use various conventional methods. In detail, the facial region detection method may use a direct recognition method and a statistical method. In the direct recognition method, a regulation may be set using a physical feature such as the outline or skin color of a facial image, a size of its component, a distance between the components, or the like, and comparison, inspection, and measurement may be performed based on the regulation. In the statistical method, the facial region may be detected based on a pre-learned algorithm. That is, the statistical method may be a method of converting unique features included in the input facial image into data and analyzing and comparing the data with a large database (of face and other object shapes). In particular, the facial region may be detected based on the pre-learned algorithm by using methods such as multi layer perceptron (MLP) and support vector machine (SVM). In a similar way, a user eye region may be identified.

As an example, the electronic apparatus 100 may acquire the user gaze information in the captured image by using the trained artificial intelligence model. As an example, the electronic apparatus 100 may acquire user gaze information in the captured image by using the trained artificial intelligence model. For example, the artificial intelligence model may be implemented as the neural network including the plurality of neural network layers. The artificial intelligence model may be implemented as a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network, or the like, and is not limited thereto.

For convenience of explanation, the description describes that the electronic apparatus 100 acquires the gaze information after identifying the user face and eyes in the captured image. However, the electronic apparatus 100 may acquire the user gaze information by inputting the captured image into the trained artificial intelligence model. For example, the artificial intelligence model may be trained to identify the user face and eyes in the captured image and then acquire the gaze information. For example, the artificial intelligence model may output information on a probability that the user faces the front of the display 110, or output whether the user faces the front.

As an example, the trained artificial intelligence model may be an on-device model included in the electronic apparatus 100, and is not limited thereto. For example, the trained artificial intelligence model may be implemented on the server.

In operation 450, the electronic apparatus 100 may control the display 110 to be operated in the 3D mode based on the content feature if the user gaze is identified as being directed toward the front of the display 110 (S440-Y).

As an example, the content feature may include various information related to the content, such as the type of content and a 3D feature of the content.

For example, the type of content may include at least one of general content or advertising content. However, the type of content is not limited thereto, may include a content delivery format such as real-time streaming content or over-the-top (OTT) content, or a content genre such as game content or movie content.

For example, the 3D feature of the content may include a probability that the content is stereoscopic content. The stereoscopic content may be content that provides a three-dimensional effect by using two images.

However, the content feature is not limited thereto, and may include at least one of information such as a scene change, a motion size, or a frame rate.

As an example, the electronic apparatus 100 may identify the content feature for each content duration. For example, the content duration may be a predetermined frame duration unit. The predetermined frame duration unit may include one frame unit, plurality of frame units, or a scene unit. The plurality of frame units are identified based on a predetermined number of frames. For example, the predetermined number may be a value set at a time of manufacturing the electronic apparatus 100 and/or a value settable/changeable by the user. A scene is a unit that represents a series of consecutive events or situations, and may include frames corresponding to a series of events occurring at a specific place during a specific time.

As an example, the electronic apparatus 100 may identify the content feature by analyzing the image for each content duration or identify the content feature based on metadata included in the content.

As an example, the electronic apparatus 100 may also provide 2D content in some durations even in case that the content is 3D content. For example, 2D advertising content may be inserted in the middle of the 3D content. In this case, if the 3D mode is operated while the 2D advertising content is provided, the user may see a screen with strangely distorted pixels or a stereoscopic 2-View form, which may cause discomfort. Accordingly, the electronic apparatus 100 may identify the content feature for each content duration.

As an example, if the display 110 is implemented as the light field display, the electronic apparatus 100 may control the lenticular lens 112 to be operated in the 3D mode by applying a predetermined voltage corresponding to the 3D mode to the active-type lenticular lens 112.

As an example, the electronic apparatus 100 may acquire the output image corresponding to the 3D mode based on the left-eye image and the right-eye image. As an example, the electronic apparatus 100 may acquire the output image based on a side-by-side image. For example, the electronic apparatus 100 may acquire the output image by respectively sub-sampling the left-eye image and the right-eye image by half horizontally, and then alternately disposing the images. For example, the electronic apparatus 100 may provide an output image 60 in which the left-eye and right-eye images 1 and 2 are sequentially and repeatedly disposed, as shown in FIG. 3.

As an example, the electronic apparatus 100 may acquire the output image changed by tracking a position of the user head and/or eyes. For example, if the output image that is mapped to the user eye position is acquired based on a user position movement, the electronic apparatus 100 may generate the output image for the viewpoint to be changed smoothly and continuously between consecutive frames by using filtering. As an example, the processor 140 may generate the output image for the viewpoint to be changed smoothly between the consecutive frames by using an infinite impulse response (IIR) filter or a finite impulse response (FIR) filter. Accordingly, the processor 140 may acquire the natural output image in which a depth difference of the binocular image is maintained even if a user position is changed.

In operation 460, the electronic apparatus 100 may control the display 110 to be operated in the 2D mode if the user is identified as not being positioned in front of the display 110 (S420-N) or the user gaze is identified as not being directed toward the front of the display 110 (S440-N).

As an example, if the display 110 is implemented as the light field display, the electronic apparatus 100 may control the lenticular lens 112 to be operated in the 2D mode by applying a predetermined voltage corresponding to the 2D mode to the in active-type lenticular lens 112.

Meanwhile, FIG. 4 shows that an order is mapped to every operation for convenience of explanation. However, the order of the steps unrelated to the order, the order of steps that may be performed in parallel with each other, or the like may not be necessarily limited to the corresponding order.

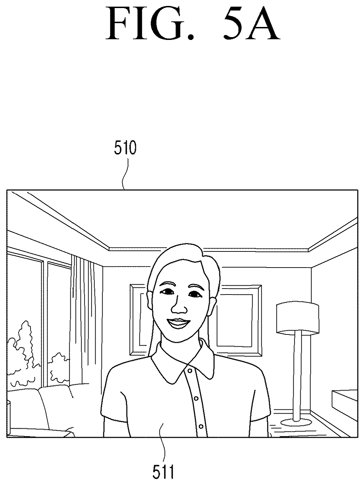

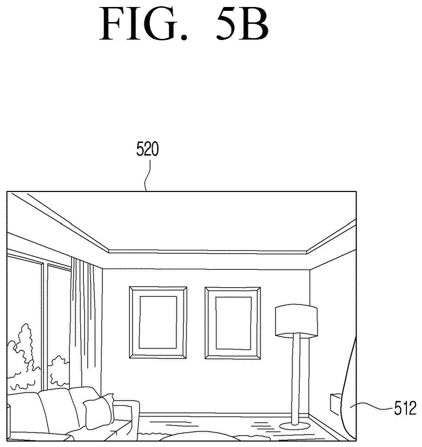

FIGS. 5A and 5B are diagrams for explaining a user identification method according to one or more embodiments.

According to an embodiment, the electronic apparatus 100 may identify that the user is positioned in front of the display 110 if a user 511 is included in a captured image 510 as shown in FIG. 5A.

As an example, the electronic apparatus 100 may identify that the user is not positioned in front of the display 110 if the specific body part, for example, the user head is not identified or only a region of the user body region less than the threshold ratio is identified even in case that a part 512 of the user body region is included in a captured image 520 as shown in FIG. 5B.

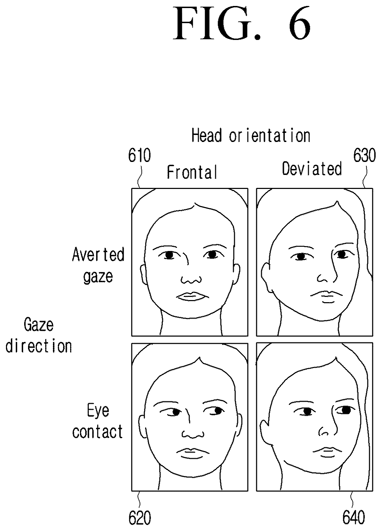

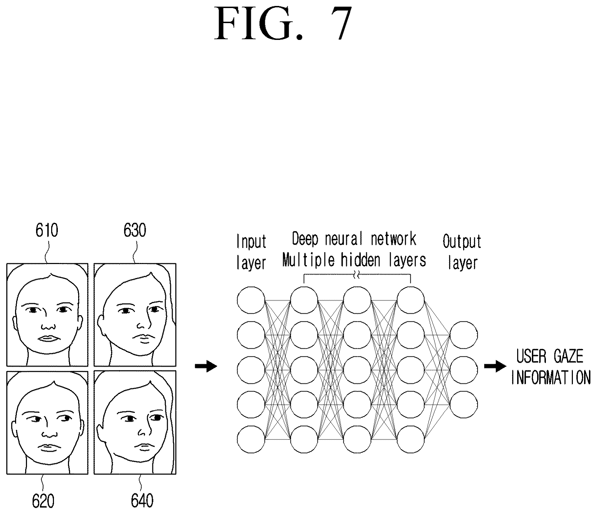

FIGS. 6 and 7 are diagrams for explaining a method of acquiring user gaze information according to one or more embodiments.

As an example, the electronic apparatus 100 may acquire captured images 610, 620, 630, and 640 by capturing the user using the camera 130.

As an example, as shown in FIG. 6, the electronic apparatus 100 may sequentially input the first to fourth captured images 610, 620, 630, and 640 acquired in real time into the trained artificial intelligence model to thus acquire the user gaze information corresponding to the first to fourth captured images 610, 620, 630, and 640.

As an example, the electronic apparatus 100 may acquire user head direction information and/or the gaze information as shown in FIG. 7 based on output information of the artificial intelligence model.

As an example, in the first captured image 610, the electronic apparatus 100 may identify that the user head is directed toward the front and the user gaze is directed toward the front. In this case, the electronic apparatus 100 may identify that the user gaze is directed toward the front of the display 110.

As an example, in the second captured image 620, the electronic apparatus 100 may identify that the user head is directed toward the front, while the user gaze is not directed toward the front. In this case, the electronic apparatus 100 may identify that the user gaze is not directed toward the front of the display 110.

As an example, in the third captured image 630, the electronic apparatus 100 may identify that the user head is not directed toward the front, while the user gaze is directed toward the front. In this case, the electronic apparatus 100 may identify that the user gaze is directed toward the front of the display 110.

As an example, in the fourth captured image 640, the electronic apparatus 100 may identify that the user head is not directed toward the front and the user gaze is not directed toward the front. In this case, the electronic apparatus 100 may identify that the user gaze is not directed toward the front of the display 110.

As an example, the artificial intelligence model may be trained to output the user gaze information by analyzing a user eye size, a user pupil size, or the like if the captured image is input. The user gaze information may be information on a direction in which the user eyes are directed.

As an example, the artificial intelligence model may be trained to output information on a probability that the user gaze is directed toward the front of the display 110 and/or that the user gaze is directed toward the front.

As an example, the artificial intelligence model being trained indicates that a basic artificial intelligence model (e.g., the artificial intelligence model including any random parameter) is trained using a large number of training data based on a learning algorithm, thereby generating a predefined operation regulation or the artificial intelligence model, set to perform a desired feature (or purpose). The learning may be conducted through a separate server and/or system, is not limited thereto, and may also be accomplished by the electronic apparatus 100. An example of the learning algorithm may include, the supervised learning, the unsupervised learning, the semi-supervised learning, or the reinforcement learning, and is not limited thereto.

As an example, the trained artificial intelligence model may be an on-device model included in the electronic apparatus 100, and is not limited thereto. For example, the trained artificial intelligence model may be implemented on the server.

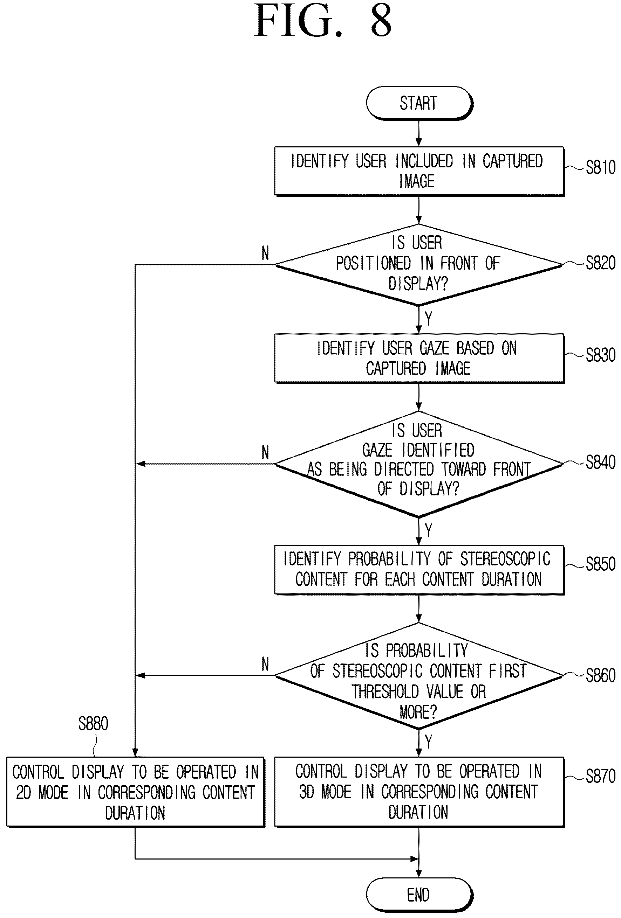

FIG. 8 is a flowchart for explaining a control method of an electronic apparatus according to one or more embodiments.

The description omits a detailed description of an operation overlapping the operation performed in the step in FIG. 4 among the operations shown in FIG. 8.

Referring to FIG. 8, in operation 810, the electronic apparatus 100 may identify the user included in the captured image.

In operation 820, the electronic apparatus 100 may identify whether the user is positioned in front of the display 110 if the user is identified in the captured image.

In operation 830, the electronic apparatus 100 may identify the user gaze based on the captured image if the user is identified as being positioned in front of the display 110 (S820-Y).

In operation 840, the electronic apparatus 100 may identify whether the user gaze is directed toward the front of the display 110.

In operation 850, the electronic apparatus 100 may identify a probability of the stereoscopic content for each content duration based on the content feature if the user gaze is identified as being directed toward the front of the display 110 (S840-Y).

As an example, the electronic apparatus 100 may identify the probability of the stereoscopic content for each content duration based on the content feature. The content feature may include the type of content, a media format of the content, or the like. The type of content may include a content genre, whether the content is the advertising content, or the like. The media format of the content may include composition information such as images, music, or text that are included in the content.

For example, the electronic apparatus 100 may identify the probability of the stereoscopic content for each content duration based on similarity between the left-eye image and the right-eye image. For example, the electronic apparatus 100 may measure the similarity between the left-eye image and the right-eye image based on at least one of structural similarity, color-based similarity, and feature-based similarity between the left-eye image and the right-eye image. For example, the electronic apparatus 100 may measure the structural similarity by comparing the structural features of the images, for example, the edges, sharpness, texture, or the like of the images. For example, the electronic apparatus 100 may measure the color-based similarity by comparing color information of the images, for example, the pixel values or color histograms of the images. For example, the electronic apparatus 100 may measure the feature-based similarity by extracting a featural point or a pattern from the image to thus measure a correspondence level between these features.

As an example, the electronic apparatus 100 may input the content for each content duration into the trained artificial intelligence model, and acquire the probability of the stereoscopic content based on information output from the artificial intelligence model.

As an example, if the plurality of images are input, the trained artificial intelligence model may be trained to feature the plurality of images, identify the similarity between the plurality of images based on the feature, and output information on the identified similarity and/or the information on the probability of the stereoscopic content.

The artificial intelligence model may be implemented as a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network, or the like, and is not limited thereto.

In operation 860, the electronic apparatus 100 may identify whether the probability of the stereoscopic content in the corresponding content duration is a first threshold value or more. For example, the first threshold value may be a value set at the manufacturing time or a value set by the user. For example, the first threshold value may be a fixed value or a changeable value.

As an example, the first threshold value may be set based on a feature of the display 110. The features of the display 110 may include various features such as a screen size, a resolution, color expression, a scanning method, and a scanning frequency.

As an example, the first threshold value may be changed based on the content feature. The content feature may include the type of content, the media format of the content, or the like. The type of content may include the content genre, whether the content is the advertising content, or the like. The media format of the content may include the composition information such as the image, music, and text that are included in the content.

As an example, the first threshold value may be changed based on the user context. The user context may include a user profile, viewing environment information, or the like. As an example, the first threshold value may be relatively low in a viewing environment where the user may easily recognize the 3D content. As an example, the first threshold value may be relatively high for the user who has difficulty in recognizing the 3D content (e.g., older user or user with poor eyesight).

In operation 870, the electronic apparatus 100 may control the display 110 to be operated in the 3D mode in the corresponding content duration if the probability of the stereoscopic content in the corresponding content duration is the first threshold value or more (S860-Y).

As an example, if the display 110 is implemented as the light field display, the electronic apparatus 100 may control the lenticular lens 112 to be operated in the 3D mode by applying the predetermined voltage corresponding to the 3D mode to the active-type lenticular lens 112.

The electronic apparatus 100 may control the display 110 to be operated in the 2D mode in operation 880 if the user is identified as not being positioned in front of the display 110 (S820-N) or the user gaze is identified as not being directed toward the front of the display 110 (S840-N).

As an example, if the display 110 is implemented as the light field display, the electronic apparatus 100 may control the lenticular lens 112 to be operated in the 2D mode by applying the predetermined voltage corresponding to the 2D mode to the active-type lenticular lens 112.

As an example, the content may be a one 2D content image even in case that the probability of the stereoscopic content is the first threshold value or more, and the electronic apparatus 100 may thus compare the left region and the right region of the content with its entire region to thus improve the accuracy in determining whether the content is the stereoscopic content.

As an example, the electronic apparatus 100 may control the display 110 to be operated in the 2D mode in some cases, even in case that the probability of the stereoscopic content in the content duration is the first threshold value or more. For example, the electronic apparatus 100 may control the display 110 to be operated in the 2D mode by providing only one region among the left region and the right region in the content duration if the content duration is less than a threshold time and the probability that every content in the preceding and following content durations is the stereoscopic content is less than the first threshold value. Accordingly, the user may enjoy the content comfortably.

Meanwhile, FIG. 8 shows that the order is mapped to every operation for convenience of explanation. However, the order of the steps unrelated to the order, the order of steps that may be performed in parallel with each other, or the like may not be necessarily limited to the corresponding order.

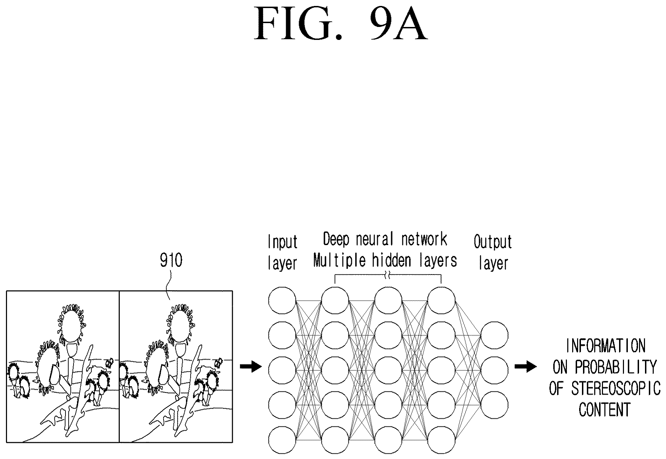

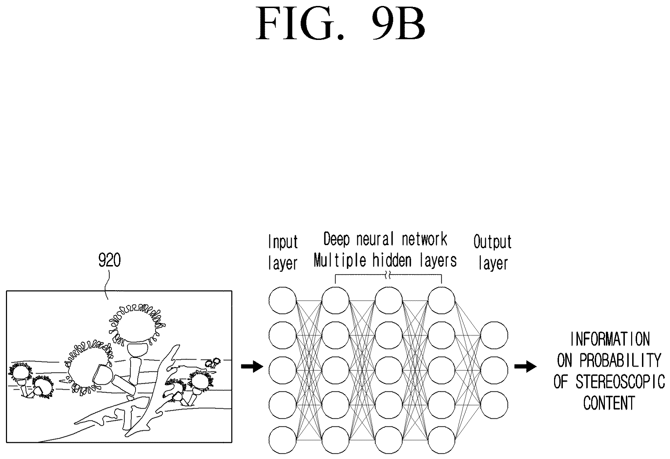

FIGS. 9A and 9B are diagrams for explaining a method for identifying whether content is stereoscopic content according to one or more embodiments.

As an example, as shown in FIGS. 9A and 9B, the electronic apparatus 100 may input content images 910 and 920 into the trained artificial intelligence model to thus acquire the information on the probability of the stereoscopic content. The content image 910 may be one frame unit, and is not limited thereto. For example, the content image 910 may be a unit having the same meaning as the plurality of frame units or the scene unit. The scene is the unit that represents a series of consecutive events or situations, and may include the frames corresponding to a series of events occurring at the specific place during the specific time.

As an example, the artificial intelligence model may be trained to analyze the similarity between the left image and the right image of the content image 910 or 920 based on the central vertical line, and output the similarity information and/or the information on the probability of the stereoscopic content.

As an example, the similarity between the left image and the right image may be high if the first content image 910 is the side-by-side image for providing the 3D image as shown in FIG. 9A. Accordingly, the AI model may output information such as 95% (or 0.95) similarity and/or information on 95% (or 0.95) probability of the stereoscopic content.

As an example, the similarity between the left image and the right image may be very low if the second content image 920 is the 2D image as shown in FIG. 9B. Accordingly, the AI model may output information such as 15% (or 0.15) similarity and/or information on 15% (or 0.15) probability of the stereoscopic content.

As an example, the trained artificial intelligence model may be the on-device model included in the electronic apparatus 100, and is not limited thereto. For example, the trained artificial intelligence model may be implemented on the server.

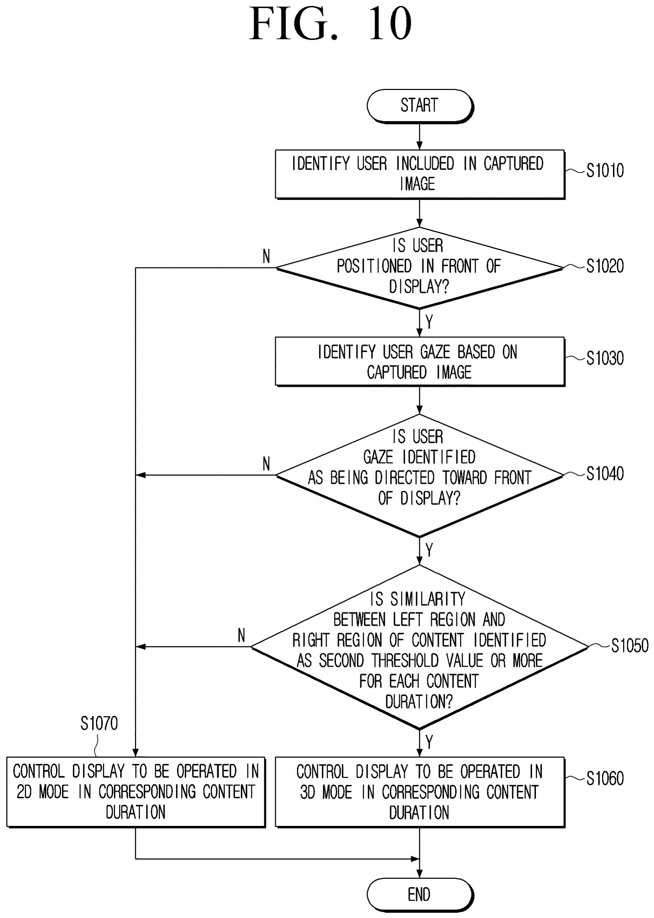

FIG. 10 is a flowchart for explaining a control method of an electronic apparatus according to one or more embodiments.

The description omits a detailed description of an operation overlapping the operation performed in the step shown in FIG. 4 or 8 among the operations shown in FIG. 10.

Referring to FIG. 10, in operation 1010, the electronic apparatus 100 may identify the user included in the captured image.

In operation 1020, the electronic apparatus 100 may identify whether the user is positioned in front of the display 110 if the user is identified in the captured image.

In operation 1030, the electronic apparatus 100 may identify the user gaze based on the captured image if the user is identified as being positioned in front of the display 110 (S1020-Y).

In operation 1040, the electronic apparatus 100 may identify whether the identified user gaze is directed toward the front of the display 110.

In operation S1050, the electronic apparatus 100 may identify whether similarity between the left region and the right region of the content based on the central vertical line is a second threshold value or more for each content duration if the user gaze is identified as being directed toward the front of the display 110 (S1040-Y). For example, the second threshold value may be a value set at the manufacturing time or a value set by the user. For example, the second threshold value may be a fixed value or a changeable value. The other features of the second threshold value may be similar to the features of the first threshold value described above.

As an example, the electronic apparatus 100 may measure the similarity between the left region and the right region based on information corresponding to each of the plurality of pixels included in the content frame. For example, the content received by the electronic apparatus 100 may include a digital value corresponding to each pixel, and the electronic apparatus 100 may encode the corresponding digital value to thus acquire a grayscale value (for example, a value from 0 to 255) corresponding to a specific grayscale range corresponding to each pixel. As an example, the electronic apparatus 100 may measure the similarity between the left region and the right region based on the digital value before acquiring the grayscale value. However, the electronic apparatus 100 is not limited thereto, and may also measure the similarity between the left region and the right region based on the grayscale value corresponding to the specific grayscale range.

As an example, the electronic apparatus 100 may identify a difference value for pixel information corresponding to the left region and the right region of the frame, and identify the similarity between the left region and the right region of the frame based on the identified difference value. For example, the electronic apparatus 100 may identify the similarity between the left region and the right region of the frame based on at least one of the sum of the difference values of the respective pixels, the average value of the difference values of the respective pixels, or the maximum or minimum value of the difference values of the respective pixels.

As an example, the electronic apparatus 100 may identify whether the similarity between the left region and the right region of the content is the second threshold value or more by converting the average value of the difference values of the respective pixels into a value for comparison with the second threshold value. For example, the higher the similarity between the left region and the right region, the smaller the average value of the difference value. Therefore, the electronic apparatus 100 may convert the value for comparison with the second threshold value to be inversely proportional to the average value.

In operation S1060, the electronic apparatus 100 may control the display 110 to be operated in the 3D mode for the corresponding content duration if the similarity between the left region and the right region of the content is identified as the second threshold value or more for each content duration (S1050-Y).

In operation 1070, the electronic apparatus 100 may control the display 110 to be operated in the 2D mode if the user is identified as not being positioned in front of the display 110 (S1020-N) or the user gaze is identified as not being directed toward the front of the display 110 (S1040-N).

Meanwhile, FIG. 10 shows that the order is mapped to every operation for convenience of explanation. However, the order of the steps unrelated to the order, the order of steps that may be performed in parallel with each other, or the like may not be necessarily limited to the corresponding order.

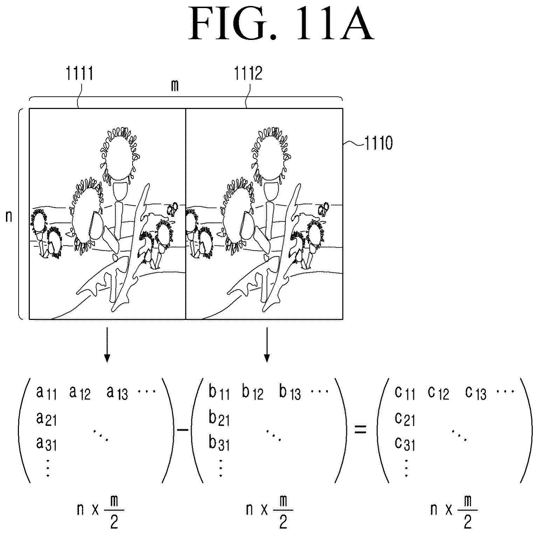

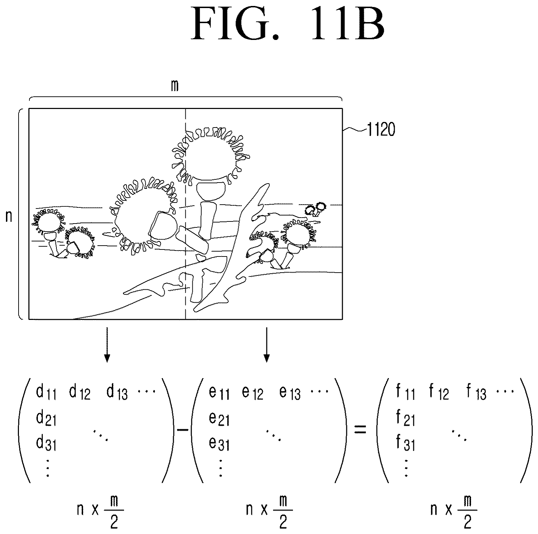

FIGS. 11A and 11B are diagrams for explaining a method for identifying whether content is stereoscopic content according to one or more embodiments.

According to one embodiment, the electronic apparatus 100 may measure the similarity between the left region and the right region based on the information corresponding to each of the plurality of pixels included in the content frame. As an example, the content may be a side-by-side image frame.

As an example, the electronic apparatus 100 may calculate a difference value for pixel information of each of a left image 1111 and a right image 1112 based on the vertical center line of received content 1110 as shown in FIG. 11A. For example, if the received content 1110 has a resolution of n*m (vertical resolution*horizontal resolution), the left image may have n*m/2 number of pixel information, and the right image may also have n*2/m number of pixel information.

As an example, the electronic apparatus 100 may calculate the difference value between the pixel values at corresponding positions of the left image 1111 and the right image 1112. For example, the electronic apparatus 100 may calculate a difference value c11 between a pixel value a11 at a position (1, 1) of the left image 1111 and a pixel value b11 at a position (1, 1) of the right image 1112, and calculate a difference value c12 between a pixel value a12 at a position (1, 2) of the left image 1111 and a pixel value b12 at a position (1, 2) of the right image 1112. The electronic apparatus 100 may calculate the differences in all the pixel values at the corresponding positions of the left image 1111 and the right image 1112 in the same manner.

As an example, in the 3D content 1110 as shown in FIG. 11A, the pixel values of the left image 1111 and the right image 1112 are similar to each other, and each of difference values c11, c12, ..., and the like calculated at the corresponding pixel positions may be calculated to be less than the threshold value.

As an example, in the 2D content 1120 as shown in FIG. 11B, the difference between the pixel values of the left image 1111 and the right image 1112 is large, and each of difference values f11, f12, ..., and the like calculated at the corresponding pixel positions may be calculated to be the threshold value or more.

Accordingly, the electronic apparatus 100 may identify the similarity between the left region and the right region of the content based on the difference between the pixel values of the left region and the right region of the content.

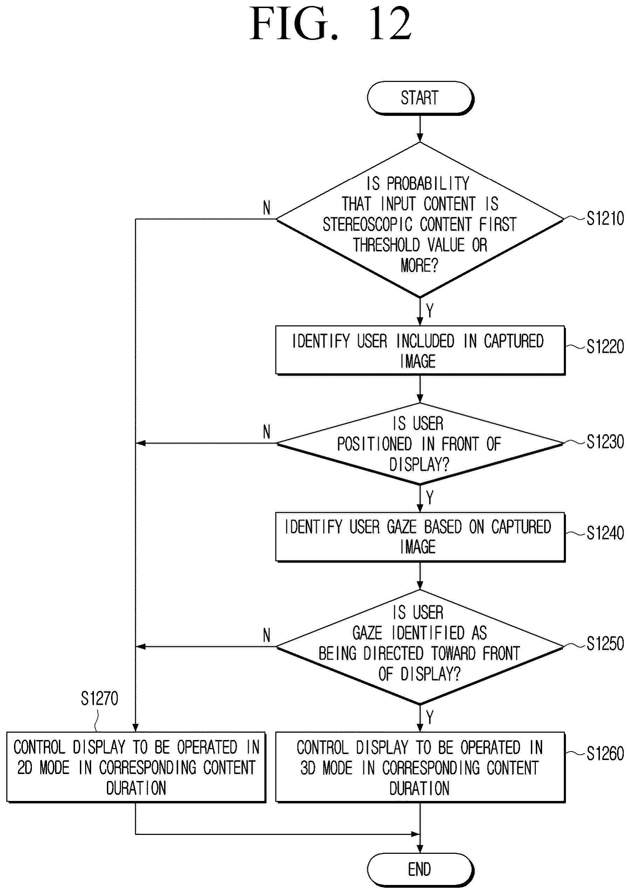

FIG. 12 is a flowchart for explaining a control method of an electronic apparatus according to one or more embodiments.

The description omits a detailed description of an operation overlapping the operation performed in the step shown in FIG. 4, 8, or 10 among the operations shown in FIG. 12.

Referring to FIG. 12, in operation 1210, the electronic apparatus 100 may identify whether the probability that the received content is the stereoscopic content is the first threshold value or more.

As an example, the electronic apparatus 100 may first identify the probability of the stereoscopic content if the content is received unlike an embodiment of FIG. 8 where the probability of the stereoscopic content is identified if the user gaze is directed toward the front of the display 110. As an example, a method of identifying the probability that the content is the stereoscopic content is the same as the method described in the various embodiments described above, and the description omits its detailed description.

In operation 1220, the electronic apparatus 100 may identify the user included in the captured image if the probability that the input content is the stereoscopic content is the first threshold value or more (S1210-Y).

In operation 1230, the electronic apparatus 100 may identify whether the user is positioned in front of the display 110.

In operation 1240, the electronic apparatus 100 may identify the user gaze based on the captured image if the user is identified as being positioned in front of the display 110 (S1230-Y).

In operation 1250, the electronic apparatus 100 may identify whether the user gaze is directed toward the front of the display 110.

In operation 1260, the electronic apparatus 100 may control the display 110 to be operated in the 3D mode during the corresponding content duration if the user gaze is identified as being directed toward the front of the display 110 (S1250-Y).

In operation 1270, the electronic apparatus 100 may control the display 110 to be operated in the 2D mode if the user is identified as not being positioned in front of the display 110 (S1230-N) or the user gaze is identified as not being directed toward the front of the display 110 (S1250-N).

An embodiment shown in FIG. 12 is described based on an embodiment shown in FIG. 8. However, even in an embodiment shown in FIG. 10, the electronic apparatus 100 may perform the operation of identifying the similarity between the left region and the right region of the content before identifying the user position and gaze.

Meanwhile, FIG. 12 shows that the order is mapped to every operation for convenience of explanation. However, the order of the steps unrelated to the order, the order of steps that may be performed in parallel with each other, or the like may not be necessarily limited to the corresponding order.

In the various embodiments described above, the electronic apparatus 100 may perform downscaling before inputting the captured image or the content image into the trained artificial intelligence model, if necessary. The reason is to reduce a computational workload of the artificial intelligence model.

Each operation according to the various embodiments described above may be performed by the processor 140, and if necessary, a module for each operation may be used. For example, each module may be implemented as at least one software, at least one hardware, and/or their combination. Each module may be implemented to use a predefined algorithm, a predefined equation, and/or the trained artificial intelligence model to perform the operation. However, at least some modules may be distributed to the external device.

According to the various embodiments described above, a user convenience may be improved because the smooth switching between the 2D mode and the 3D mode may be automatically performed based on the user gaze and the content situation.

Meanwhile, the methods according to the various embodiments of the present disclosure described above may be implemented only by software upgrade or hardware upgrade of the conventional electronic apparatus and/or the server.

In addition, the various embodiments of the present disclosure described above may be performed through an embedded server disposed in the electronic apparatus, or a server disposed outside the electronic apparatus .

Meanwhile, according to an embodiment of the present disclosure, the various embodiments described above may be implemented in software including an instruction stored in a machine-readable storage medium (for example, a computer-readable storage medium). A machine may be an apparatus that invokes the stored instruction from the storage medium, may be operated based on the invoked instruction, and may include the electronic apparatus (e.g., electronic apparatus 100) according to the disclosed embodiments. If the instruction is executed by the processor, the processor may perform a function corresponding to the instruction directly or by using another component under control of the processor. The instruction may include a code provided or executed by a compiler or an interpreter. The machine-readable storage medium may be provided in the form of a non-transitory storage medium. Here, a term "non-transitory" may only indicate that the storage medium is tangible without including a signal, and does not distinguish whether data are semi-permanently or temporarily stored in the storage medium.

In addition, according to an embodiment of the present disclosure, the method according to the various embodiments described above may be provided by being included in a computer program product. The computer program product may be traded as a product between a seller and a purchaser. The computer program product may be distributed in a form of a storage medium (for example, a compact disc read only memory (CD-ROM)) that may be read by the machine or online through an application store (for example, PlayStore^{™}). In case of the online distribution, at least a portion of the computer program product may be at least temporarily stored in a storage medium such as a memory of a server of a manufacturer, a server of an application store or a relay server, or be temporarily provided.

In addition, each of the components (for example, modules or programs) according to the various embodiments described above may include one entity or a plurality of entities, and some of the corresponding sub-components described above may be omitted or other sub-components may be further included in the various embodiments. Alternatively or additionally, some of the components (e.g., modules or programs) may be integrated into one entity, and may perform functions performed by the respective corresponding components before being integrated in the same or similar manner. Operations performed by the modules, the programs, or other components according to the various embodiments may be executed in a sequential manner, a parallel manner, an iterative manner or a heuristic manner, at least some of the operations may be performed in a different order or be omitted, or other operations may be added.

Although the embodiments are shown and described in the present disclosure as above, the present disclosure is not limited to the above-mentioned specific embodiments, and may be variously modified by those skilled in the art to which the present disclosure pertains without departing from the gist of the present disclosure as claimed in the accompanying claims. These modifications should also be understood to fall within the scope and spirit of the present disclosure.

## Claims

1. An electronic apparatus comprising:
a display configured to be operated in a three-dimensional (3D) mode and a two-dimensional (2D) mode;
at least one camera to capture an image in front of the display;
a memory storing at least one instruction; and
at least one processor configured to execute the at least one instruction to:
identify whether a user is positioned in front of the display based on the captured image,
when the user is identified as being positioned in front of the display, identify whether a user gaze is directed toward a front of the display,
when the user gaze is identified as being directed toward the front of the display, control the display to be operated in the 3D mode, and
when the user is not identified as being positioned in front of the display, or when the user gaze is identified as not being directed toward the front of the display, control the display to be operated in the 2D mode.

2. The apparatus as claimed in claim 1, wherein
the at least one processor is configured to execute the at least one instruction to:
when the user gaze is identified as being directed toward the front of the display, identify a probability that content to be displayed is stereoscopic content for each content duration,
control the display to be operated in the 3D mode in a content duration in which the identified probability of the stereoscopic content is a threshold value or more, and
control the display to be operated in the 2D mode in a content duration in which the identified probability of the stereoscopic content is less than the threshold value.

3. The apparatus as claimed in claim 2, wherein
the at least one processor is configured to execute the at least one instruction to:
input the content to be displayed into a trained artificial intelligence model trained for each content duration, and
identify the probability that the content to be displayed is the stereoscopic content based on information output from the trained artificial intelligence model.

4. The apparatus as claimed in claim 2, wherein
the at least one processor is configured to execute the at least one instruction to:
input the captured image into a trained artificial intelligence model, and
identify whether the user gaze is directed toward the front of the display based on information output from the trained artificial intelligence model.

5. The apparatus as claimed in claim 1, wherein
content to be displayed includes side-by-side content, and
the at least one processor is configured to execute the at least one instruction to:
identify whether similarity between a left region of the side-by-side content and a right region of the side-by-side content is a threshold value for each side-by-side content duration,
control the display to be operated in the 3D mode in the side-by-side content duration in which the similarity between the left region of the side-by-side content and the right region of the side-by-side content is the threshold value or more, and
control the display to be operated in the 2D mode in the side-by-side content duration in which the similarity between the left region of the side-by-side and the right region of the side-by-side content is less than the threshold value.

6. The apparatus as claimed in claim 1, wherein
the at least one processor is configured to execute the at least one instruction to, while the display is being operated in the 3D mode:
when the user is not identified as being positioned in front of the display, or when the user gaze is identified as not being directed toward the front of the display, control the display to switch to the 2D mode.

7. The apparatus as claimed in claim 1, wherein
the at least one processor is configured to execute the at least one instruction to, while the the display is being operated in the 3D mode:
when the user gaze is identified as being directed toward the front of the display, identify whether content to be displayed is stereoscopic content for each content duration, and
control the display to be switched to the 3D mode when the content to be displayed is identified as the stereoscopic content.

8. The apparatus as claimed in claim 1, wherein
the at least one processor is configured to execute the at least one instruction to:
identify a probability that content to be displayed is stereoscopic content for each content duration,
identify whether the user gaze is directed toward the front of the display based on the captured image in the content duration in which the identified probability of the stereoscopic content is a threshold value or more,
control the display to be operated in the 3D mode when the user gaze is identified as being directed toward the front of the display and the identified probability of the stereoscopic content is the threshold value or more, and
control the display to be operated in the 2D mode in the content duration in which the identified probability of the stereoscopic content is less than the threshold value.

9. The apparatus as claimed in claim 1, wherein
the at least one processor is configured to execute the at least one instruction to:
identify the user as being positioned in front of the display when a specific body part of the user is included in the captured image or a user body region that has a predetermined ratio or more is identified as being included in the captured image.

10. The apparatus as claimed in claim 1, wherein
the display is implemented as a light field display including a lenticular lens array, and
the at least one processor is configured to control the display to be operated either in the 3D mode or the 2D mode by adjusting a voltage applied to the lenticular lens array included in the light field display.

11. A method of controlling an electronic apparatus which includes a display configured to be operated in a three-dimensional (3D) mode and a two-dimensional (2D) mode, and at least one camera to capture an image in front of the display, the method comprising:
identifying whether a user is positioned in front of the display based on an image captured by the at least one camera;
when the user is identified as being positioned in front of the display, identifying whether a user gaze is directed toward a front of the display;
when the user gaze is identified as being directed toward the front of the display, controlling the display to be operated in the 3D mode; and
when the user is not identified as being positioned in front of the display, or when the user gaze is identified as not being directed toward the front of the display, controlling the display to be operated in the 2D mode.

12. The method as claimed in claim 11, further comprising:
when the user gaze is identified as being directed toward the front of the display, identifying a probability that content to be displayed is stereoscopic content for each content duration,
controlling the display to be operated in the 3D mode in a content duration in which the identified probability of the stereoscopic content is a threshold value or more, and
controlling the display to be operated in the 2D mode in a content duration in which the identified probability of the stereoscopic content is less than the threshold value.

13. The method as claimed in claim 12, wherein
the identifying of the probability that the content to be displayed is the stereoscopic content includes:
inputting the content to be displayed into a trained artificial intelligence model trained for each content duration, and
identifying the probability that the content to be displayed is the stereoscopic content based on information output from the trained artificial intelligence model.

14. The method as claimed in claim 12, wherein
the identifying of whether the user gaze is directed toward the front of the display includes:
inputting the captured image into a trained artificial intelligence model, and
identifying whether the user gaze is directed toward the front of the display based on information output from the trained artificial intelligence model.

15. A non-transitory computer-readable medium which stores a computer instruction for causing an electronic apparatus to perform an operation in case of being executed by a processor of the electronic apparatus including a display configured to be operated in a three-dimensional (3D) mode and a two-dimensional (2D) mode, and at least one camera to capture an image in front of the display, wherein the operation includes:
identifying whether a user is positioned in front of the display based on an image captured by the at least one camera;
when the user is identified as being positioned in front of the display, identifying whether a user gaze is directed toward a front of the display;
when the user gaze is identified as being directed toward the front of the display, controlling the display to be operated in the 3D mode; and
when the user is not identified as being positioned in front of the display, or when the user gaze is identified as not being directed toward the front of the display, controlling the display to be operated in the 2D mode.
